# EUROPEAN PATENT SPECIFICATION

(11) **EP 3 535 489 B1**
(45) Date of publication and mention of the grant of the patent: **27.07.2022**
(21) Application number: 17797297.3
(22) Date of filing: 02.11.2017
(51) Int. Cl.: F03D 1/06

(54) **WIND TURBINE BLADE WITH BOUNDARY LAYER FENCE**
WINDTURBINENSCHAUFEL MIT GRENZSCHICHTZAUN
PALE D'ÉOLIENNE AVEC BARRIÈRE DE COUCHE LIMITE

(30) Priority: 04.11.2016 US 201662417376 P; 26.07.2017 GB 201712029
(43) Date of publication of application: 11.09.2019
(73) Proprietor: Vestas Wind Systems A/S, 8200 Aarhus N (DK)
(72) Inventor: GUPTA, Anurag, Manvel Texas 77578 (US)
(74) Representative: Vestas Patents Department
(86) International application number: PCT/EP2017/078078
(87) International publication number: WO 2018/083185

(56) References cited:
- EP-A1- 2 497 944
- EP-A1- 2 877 737
- EP-A2- 2 589 797
- EP-B1- 2 589 797
- EP-B1- 2 877 737
- WO-A1-2013/020959
- WO-A1-2015/166813
- JP-A- 2015 209 831
- US-A1- 2006 280 614

## Description

### Technical Field

The invention relates generally to wind turbines, and more particularly to a wind turbine blade incorporating an aerodynamic loss reduction device in the form of a boundary layer fence.

### Background

Wind turbines are used to produce electrical energy using a renewable resource and without combusting a fossil fuel. Generally, a wind turbine converts kinetic energy from the wind into electrical power. A horizontal-axis wind turbine includes a tower, a nacelle located at the apex of the tower, and a rotor having a plurality of blades and supported in the nacelle by means of a shaft. The shaft couples the rotor either directly or indirectly with a generator, which is housed inside the nacelle. Consequently, as wind forces the blades to rotate, electrical energy is produced by the generator.

Wind turbines are subject to reduced lift caused by the separation of air flow around the blade from the blade surface at a boundary layer. Radial or spanwise air flow, i.e. flow along the length of the blade, can increase the separation of air flow. Consequently, boundary layer fences have been employed on wind turbine blades in their inboard regions to inhibit spanwise boundary flow and thus mitigate outboard flow separation.

Conventional boundary layer fences act as a barrier to inhibit spanwise boundary flow or "centrifuging" of the flow. However, such boundary layer fences exhibit corner flow parasitic drag or loss associated with "pooling" of low-momentum fluid at the base or corner of the fence. As such, conventional boundary layer fences usually do not provide sufficient performance enhancement to justify the cost of installation.

Thus, there remains a need for an improved wind turbine blade boundary layer fence that addresses these and other shortcomings in conventional wind turbine blade boundary layer fences.

US2006/280614 describes a wind turbine rotor blade with a planar element located in a zone of transversal air which runs from the root to the tip of the blade. WO2013/020959 describes a wind turbine blade with a flow filter located in a separated flow region, where the flow filter permits boundary layer radial flow to flow through the flow filter. EP2877737 describes a wind turbine blade having a shaped planar member that acts as a stall fence or flow diverter. EP2497944 describes a wind turbine blade with systems for manipulating a boundary layer across the rotor blade.

### Summary

In one aspect, a wind turbine blade comprises a hub end, a tip end, a leading edge, a trailing edge, a pressure side, and a suction side. At least one boundary layer fence is located on at least one of the pressure side and the suction side of the blade. A plurality of passages is formed in the fence. Each passage has an inlet on a hub end side of the fence and an outlet on a tip end side of the fence and a cross-section that decreases from the inlet to the outlet. Each outlet is oriented to discharge air towards the trailing edge of the blade.

The boundary layer fence can be formed as a continuous body, with the passages being nozzles extending through the body. The boundary layer fence can also be formed from a plurality of discrete vanes, with the passages being formed between adjacent ones of the vanes.

The boundary layer fence can have a generally triangular transverse cross-section, a height of about one to two times the boundary layer thickness, and a width of about one-half to two times the boundary layer thickness.

The inlet and outlet can have an area ratio that ranges from about 2:1 to about 30:1. The outlet can form a yaw angle θ₁ with respect to a transverse extent of the blade that ranges from about 10 degrees to about 60 degrees, and/or a pitch angle θ₂ with respect to a longitudinal extent of the blade that ranges from about 5 degrees to about 45 degrees. The transverse extent is in a chordwise direction of the blade, that is in the direction from a leading edge to a trailing edge of the blade. The pitch angle is with respect to a longitudinal extent of the blade, that is a spanwise axis of the blade, and directed away from the blade surface.

The boundary layer fence can have an airfoil shape, an airfoil shape with cambered aft end, an airfoil shape with a blunt boat-tailed aft end, or an airfoil shape with a sharp aft end.

The boundary layer fence can be a partial chord boundary layer fence located on the suction side of the blade, a partial chord boundary layer fence located on the pressure side of the blade, or a full ring boundary layer fence located around an entirety of the blade.

The boundary layer fence can be generally perpendicular to the leading edge of the blade, generally convexly shaped when viewed from the tip end of the blade, or generally concavely shaped when viewed from the tip end of the blade.

In one embodiment, the wind turbine blade may include a plurality of boundary layer fences on at least one of the pressure side and the suction side. For example, a wind turbine blade may have a plurality of boundary layer fences on at least one of the pressure side and the suction side distributed in a spanwise direction so as to be spaced apart from each other. The boundary layer fences may be different from each other. In this regard, one of the boundary layer fences may have a height, width, length and/or chordwise position different than a corresponding height, width, length and/or chordwise position of another boundary layer fence.

In another aspect, a wind turbine comprises a tower, a nacelle mounted on the tower, a hub mounted on the nacelle, and a plurality of blades of the type mentioned above mounted on the hub.

### Brief Description of the Drawings

The accompanying drawings, which are incorporated in and constitute a part of this specification, illustrate an embodiment of the invention and, together with a general description of the invention given above, and the detailed description given below, serve to explain the invention.
Fig. 1 is a perspective view of a wind turbine.
Fig. 2 is a perspective view of a wind turbine blade including a boundary layer fence according to one embodiment.
Fig. 3 is an enlarged perspective view of the hub end of the wind turbine blade of Fig 2.
Fig. 4 is a cross-sectional view taken along line 4-4 in Fig. 3.
Fig. 5 is a cross-sectional view taken along line 5-5 in Fig. 4.
Fig. 6 is an enlarged top view of the hub end of a wind turbine blade including a boundary layer fence according to another embodiment.
Fig. 7 is an enlarged top view of a portion of the boundary layer fence of Fig. 6.
Fig. 8 is a cross-sectional view taken along line 8-8 in Fig. 7.
Figs. 9A-9D are top views illustrating various geometrical shapes of the boundary layer fence of Fig. 6.
Fig. 10 is an enlarged top view of the hub end of the wind turbine blade of Fig. 6 illustrating various positions and orientations of the boundary layer fence of Fig. 6.
Fig. 11 is a transverse cross-sectional view through a wind turbine blade illustrating a partial chord boundary layer fence of the present invention.
Fig. 12 is a transverse cross-sectional view through a wind turbine blade illustrating a full ring boundary layer fence of the present invention.

### Detailed Description

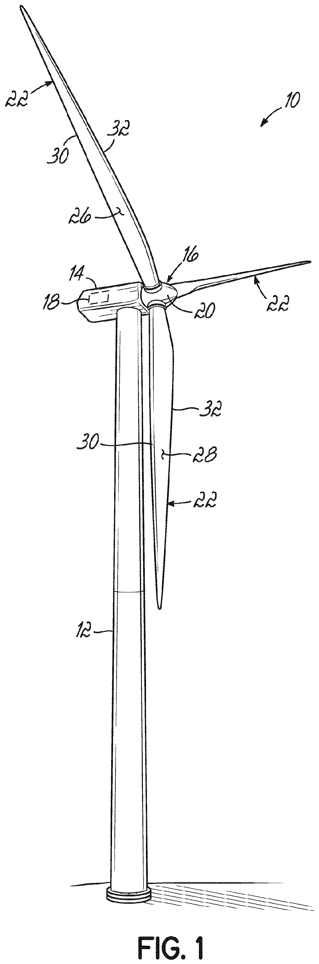

With reference to Fig. 1, a wind turbine 10 includes a tower 12, a nacelle 14 disposed at the apex of the tower 12, and a rotor 16 operatively coupled to a generator 18 housed inside the nacelle 14. In addition to the generator 18, the nacelle 14 houses miscellaneous components required for converting wind energy into electrical energy and various components needed to operate, control, and optimize the performance of the wind turbine 10. The tower 12 supports the load presented by the nacelle 14, the rotor 16, and other components of the wind turbine 10 that are housed inside the nacelle 14 and also operates to elevate the nacelle 14 and rotor 16 to a height above ground level or sea level, as may be the case, at which faster moving air currents of lower turbulence are typically found.

The rotor 16 of the wind turbine 10, which is represented as a horizontal-axis wind turbine, serves as the prime mover for the electromechanical system. Wind exceeding a minimum level will activate the rotor 16 and cause rotation in a substantially perpendicular direction to the wind direction. The rotor 16 of wind turbine 10 includes a central hub 20 and a plurality of blades 22 that project outwardly from the central hub 20 at locations circumferentially distributed thereabout. In the representative embodiment, the rotor 16 includes three blades 22, but the number may vary. The wind turbine blades 22 are configured to interact with the passing air flow to produce lift that causes the rotor 16 to spin generally within a plane defined by the blades 22. Each blade 22 has a pressure side 26, a suction side 28, a leading edge 30, a trailing edge 32, a hub end 34 and a tip end 36.

The wind turbine 10 may be included among a collection of similar wind turbines belonging to a wind farm or wind park that serves as a power generating plant connected by transmission lines with a power grid, such as a three-phase alternating current (AC) power grid. The power grid generally consists of a network of power stations, transmission circuits, and substations coupled by a network of transmission lines that transmit the power to loads in the form of end users and other customers of electrical utilities. Under normal circumstances, the electrical power is supplied from the generator 18 to the power grid as known to a person having ordinary skill in the art.

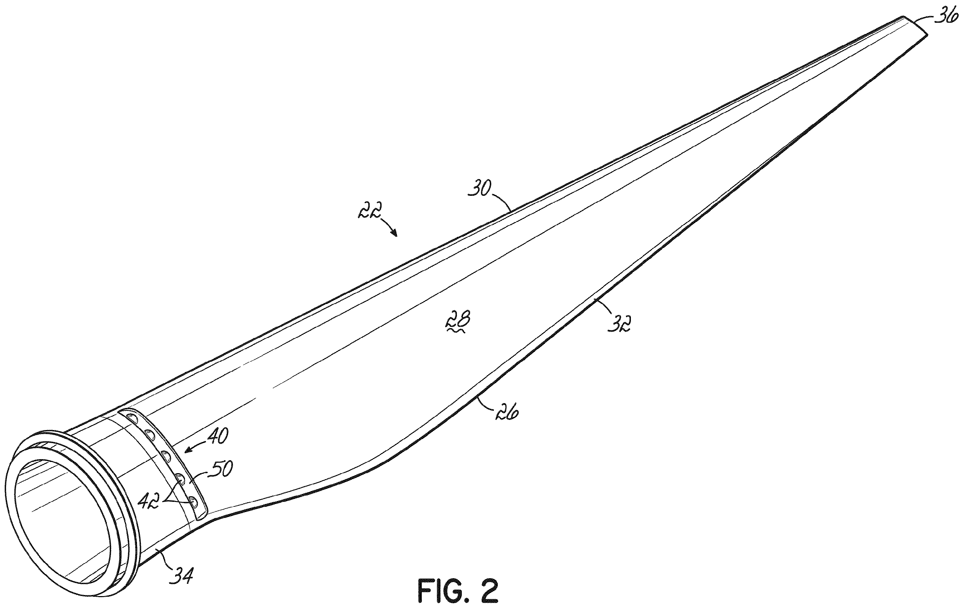

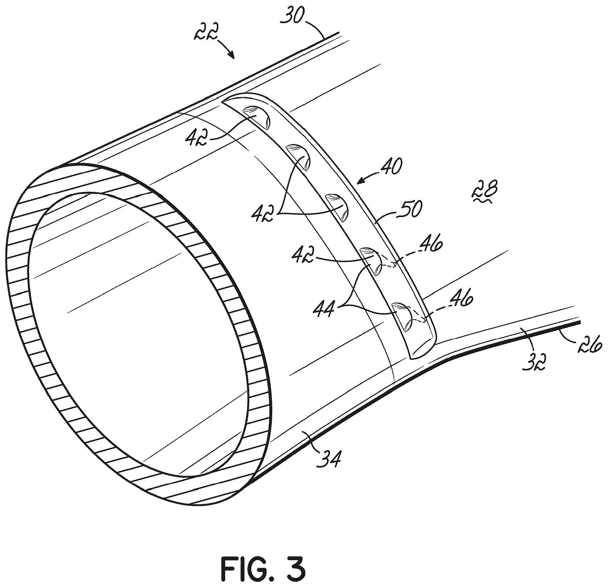

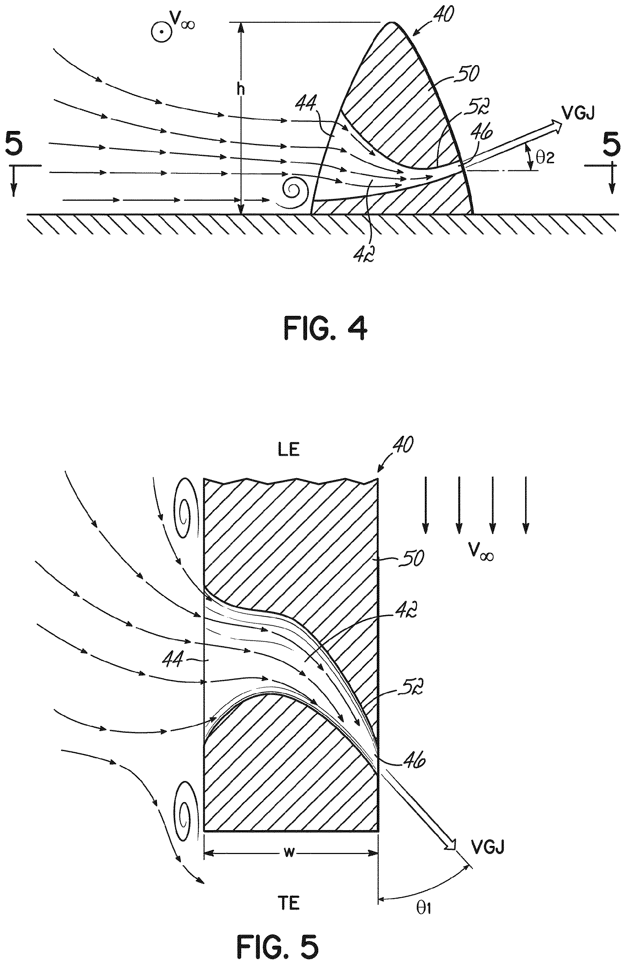

Referring to Figs. 2-5, a boundary layer fence 40 according to the principles of the present invention is illustrated. The boundary layer fence 40 is illustrated mounted on a suction side 28 of blade 22, but could as well be mounted on the pressure side 26 of blade 22 or both the pressure side 26 and suction side 28 of blade 22. A plurality of passages 42 is formed in the fence 40. Each passage 42 has an inlet 44 on a hub end side of the fence 40 and an outlet 46 on a tip end side of the fence 40 and a cross-section that decreases from the inlet 44 to the outlet 46. Each outlet 46 is oriented to discharge air towards the trailing edge 32 of the blade 22 (leading edge direction denoted LE and trailing edge direction denoted TE in Fig. 5).

More particularly, the boundary layer fence 40 illustrated in Figs. 2-5 is formed as a continuous body 50, with the converging passages 42 being nozzles 52 extending through the body 50. As shown in Figs. 4 and 5, the boundary layer fence 40 has a generally triangular transverse cross-section, a height h equal to about one to two times the boundary layer thickness, and a width w of about one-half to two times the boundary layer thickness. As used herein, the boundary layer thickness is the wall-normal extent of the low momentum fluid in the three-dimensional separated flow region. By way of example and without limitation, the height h of the boundary layer fence 40 may be between about 0.1% and about 15% of the chord. The width of the boundary layer fence 40 may similarly be between about 0.1% and about 15% of the chord. The inlet 44 and outlet 46 have an area ratio that ranges from about 2:1 to about 30:1. The outlet 46 forms a yaw angle θ₁ with respect to a transverse extent (e.g., in a chord direction) of the blade 22. The yaw angle θ₁ ranges from about 10 degrees to about 60 degrees. The outlet 46 forms a pitch angle θ₂ with respect to a longitudinal extent (e.g., in a spanwise direction) of the blade 22. The pitch angle θ₂ ranges from about 5 degrees to about 45 degrees. Venting the fence 40 in such a manner prevents flow from pooling and thus prevents drag enhancing corner flow where the low momentum fluid from the hub end 34 of the blade 22 impacts the fence 40. By aerodynamically shaping the passages 42 as nozzles 52, flow is exhausted as accelerated jets which can act to reduce flow separation and/or as vortex generator jets (denoted VGJ in Figs. 4 and 5).

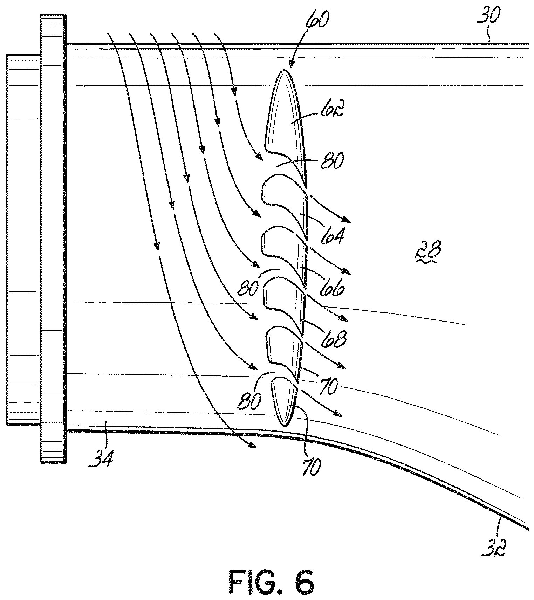

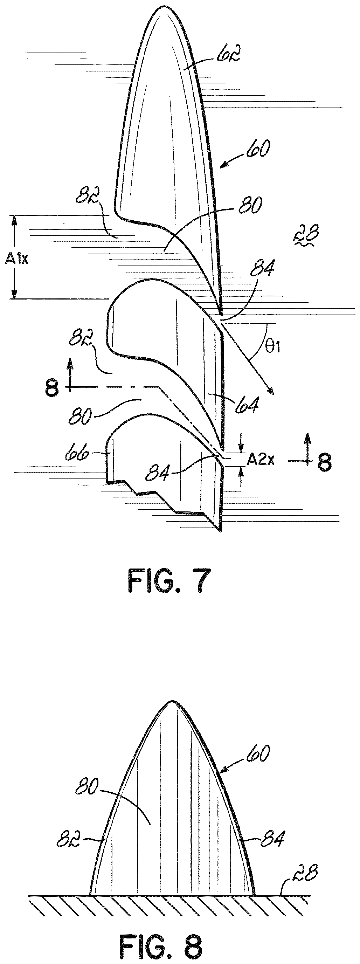

Referring to Figs. 6-8, another embodiment of a boundary layer fence 60 according to the principles of the present invention is illustrated. In this embodiment boundary layer fence 60 is formed from a plurality of discrete vanes 62, 64, 66, 68, 70, 72. Converging passages 80 are formed between adjacent ones of the vanes 62, 64, 66, 68, 70, 72. Similar to the prior embodiment, boundary layer fence 60 has a generally triangular transverse cross-section, a height h equal to about one to two times the boundary layer thickness, and a width w of about one-half to two times the boundary layer thickness. Each passage 80 has an inlet 82 and an outlet 84. Inlet 82 has an area A₁ₓ and outlet 84 has an area A₂ₓ. Similar to the prior embodiment, the ratio of area A₁ₓ to area A₂ₓ ranges from about 2:1 to about 30:1. Also similar to the prior embodiment, outlet 84 forms a yaw angle θ₁ with respect to a transverse extent of the blade 22 ranging from about 10 degrees to about 60 degrees, and forms a pitch angle θ₂ with respect to a longitudinal extent of the blade 22 ranging from about 5 degrees to about 45 degrees. Again similar to the prior embodiment, venting the boundary layer fence 60 prevents pooling and aerodynamically shaping the passages 80 exhausts flow as accelerated jets reducing flow separation.

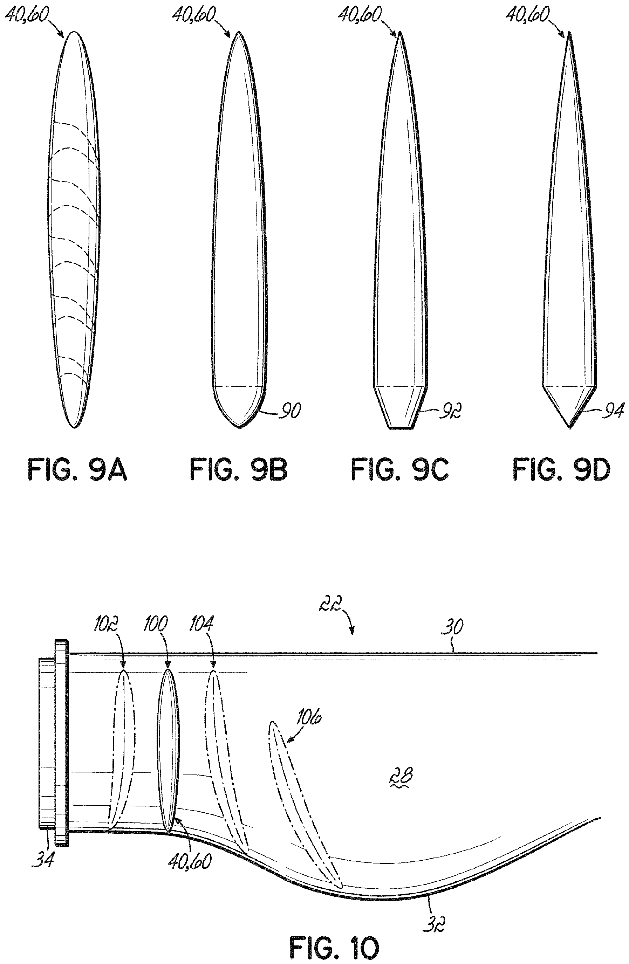

Referring to Figs. 9A-9D, various exemplary geometries of boundary layer fences 40, 60 are illustrated. In Fig. 9A the boundary layer fence 40, 60 has an airfoil or streamlined shape having a mean line and an associated thickness distribution. In Fig. 9B the boundary layer fence 40, 60 has an airfoil shape with a cambered aft end 90. In Fig. 9C the boundary layer fence 40, 60 has an airfoil shape with a blunt boat-tailed aft end 92. In Fig. 9D the boundary layer fence 40, 60 has an airfoil shape with a sharp aft end 94.

Referring to Fig. 10, various exemplary positions and orientations of boundary layer fences 40, 60 are illustrated. In one orientation 100 the boundary layer fence 40, 60 is generally straight and generally perpendicular to the leading edge 30 of the blade 22. In another orientation 102 the boundary layer fence 40, 60 is generally convexly shaped when viewed from the tip end 36 of the blade 22. In yet another orientation 104 the boundary layer fence 40, 60 is generally concavely shaped when viewed from the tip end 36 of the blade 22. In yet another orientation 106 the boundary layer fence 40, 60 is generally concavely shaped when viewed from the tip end 36 of the blade 22 and is positioned so as to be spaced closer to the trailing edge 32 of the blade 22 than the leading edge 30 of the blade 22.

It should be recognized that in an alternative embodiment, a wind turbine blade 22 may include a plurality of boundary layer fences. In one embodiment, for example, a blade 22 may include a plurality of boundary layer fences spaced in a spanwise direction along the blade 22. In this regard, the reference numerals 100, 102, 104, 106 demonstrate an arrangement of a plurality of boundary layer fences distributed in a spanwise direction. Each of the boundary layer fences may have different characteristics, including different height, widths and/or lengths. The boundary layer fences may also be placed at different positions in a chordwise direction on the blade 22. Thus, different arrangements and combinations are possible according to the present invention.

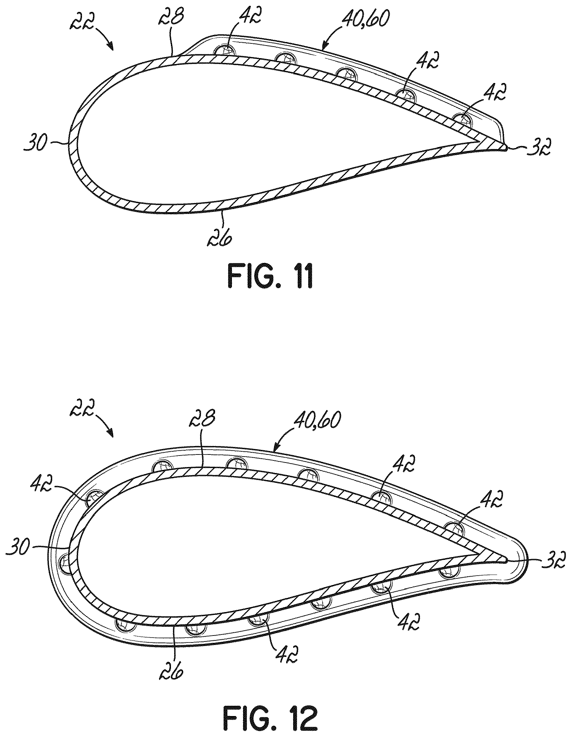

Referring to Figs. 11 and 12, various exemplary configurations of boundary layer fences 40, 60 are illustrated. Fig. 11 illustrates a partial chord boundary layer fence 40, 60 which could be located on either the pressure side 26 or the suction side 28 of the blade 22. Fig. 12 illustrates a full ring boundary layer fence 40, 60 located around an entirety of the blade 22.

In sum, the present invention integrates a cascade of nozzles or vanes into a boundary layer fence positioned in the root region of a wind turbine blade. The boundary layer fence will typically, but not necessarily, be positioned on the suction side of the blade. The nozzle/vane cascade is a collection of converging flow passages that accelerates the flow from the hub or inboard side of the fence to the tip or outboard side of the fence. In one form, the boundary layer fence is formed as a continuous body and the passages are formed by nozzles in the body. In another form the boundary layer fence is formed by discrete vanes and the passages are formed between adjacent ones of the vanes. The boundary layer fence of the present invention provides a number of advantages over and above conventional prior art boundary layer fences. The nozzle/vane cascade collects low-momentum fluid centrifuging in the root region and pooling on the hub side of the fence. The nozzles/vanes accelerate this flow along their respective passages that are designed to exit at tailored locations as air jets. With the acceleration comes a significant increase in jet momentum and the flow exits as vortex generator jets at tailored locations and angles (i.e. pitch and yaw) to the local flow field.

The boundary layer fence of the present invention eliminates the 3D corner flow/pooling loss effect on the hub side of the fence exhibited by conventional prior art boundary layer fences. The centrifuging fluid is guided away (sucked) into the nozzles/vanes and this minimizes both the parasitic effects as well as loading decreases. The accelerated vortex generator jets can be introduced in an optimal fashion on the outboard side of the fence and used to reduce the extent of the separated flow, thus gaining significant root region loading and performance. Prior art conventional boundary layer fences could only contain spillage; the boundary layer fence of the present invention provides a means of passively converting the contained spillage into a means of passive flow control.

While the present invention has been illustrated by a description of various preferred embodiments and while these embodiments have been described in some detail, it is not the intention of the inventor to restrict or in any way limit the scope of the appended claims to such detail. Additional advantages and modifications will readily appear to those skilled in the art. Thus, the various features of the invention may be used alone or in any combination depending on the needs and preferences of the user.

## Claims

1. A wind turbine blade (22), comprising:
a hub end (34), a tip end (36), a leading edge (30), a trailing edge (32), a pressure side (26), and a suction side (28);
at least one boundary layer fence (40) on at least one of said pressure side and said suction side of said blade; and
a plurality of passages (42) formed in said fence, each said passage having an inlet (44) on a hub end side of said fence and an outlet (46) on a tip end side of said fence; **characterised in that**
each passage (42) has a cross-section that decreases from said inlet (44) to said outlet, each said outlet (46) oriented to discharge air towards said trailing edge of said blade.

2. The wind turbine blade according to claim 1, wherein said boundary layer fence (40) is formed as a continuous body (50), and wherein said passages are nozzles (52) extending through said body; or
wherein said boundary layer fence is formed from a plurality of discrete vanes (62, 64, 66, 68, 70, 72), and wherein said passages are formed between adjacent ones of said vanes.

3. The wind turbine blade according to any of the preceding claims, wherein said boundary layer fence (40) has a generally triangular transverse cross-section.

4. The wind turbine blade according to any of the preceding claims, wherein said boundary layer fence (40) has a height of about one to two times the boundary layer thickness and a width of about one-half to two times the boundary layer thickness.

5. The wind turbine blade according to any of the preceding claims, wherein said inlet (44) and said outlet (46) have an area ratio that ranges from about 2:1 to about 30:1.

6. The wind turbine blade according to any of the preceding claims, wherein said outlet (46) forms a yaw angle θ₁ with respect to a transverse extent of said blade where θ₁ ranges from about 10 degrees to about 60 degrees, and/or said outlet forms a pitch angle θ₂ with respect to a longitudinal extent of said blade where θ₂ ranges from about 5 degrees to about 45 degrees.

7. The wind turbine blade according to any of the preceding claims, wherein said boundary layer fence (40) has an airfoil shape.

8. The wind turbine blade according to any of the preceding claims, wherein said boundary layer fence (40) has an airfoil shape with a cambered aft end (90), a blunt boat-tailed aft end (92), or a sharp aft end (94).

9. The wind turbine blade according to any of the preceding claims, wherein said boundary layer fence (40) is a partial chord boundary layer fence located on said suction side (28) of said blade; or
wherein said boundary layer fence is a partial chord boundary layer fence located on said pressure side (26) of said blade.

10. The wind turbine blade according to any of claims 1-8, wherein said boundary layer fence (40) is a full ring boundary layer fence located around an entirety of said blade.

11. The wind turbine blade according to any of the preceding claims, wherein said boundary layer fence (40) is generally perpendicular to said leading edge (30) of said blade.

12. The wind turbine blade according to any of claims 1-10, wherein said boundary layer fence (40) is generally convexly shaped when viewed from said tip end of said blade
or wherein said boundary layer fence is generally concavely shaped when viewed from said tip end of said blade.

13. The wind turbine blade according to any of the preceding claims, wherein the wind turbine blade includes a plurality of boundary layer fences (40) on at least one of said pressure side (26) and said suction side (28) of said blade.

14. The wind turbine blade according to claim 13, wherein one boundary layer fence (40) has a height, width, length and/or chordwise position on the blade different than a corresponding height, width, length and/or chordwise position of another boundary layer fence.

15. A wind turbine (10), comprising:
a tower (12);
a nacelle (14) mounted on said tower;
a hub (20) mounted on said nacelle; and
a plurality of blades (22) according to any of claims 1-14 mounted on said hub.

## Patentansprüche

1. Windkraftanlagenblatt (22), umfassend:
ein Nabenende (34), ein Spitzenende (36), eine Blattvorderkante (30), eine Blatthinterkante (32), eine windzugewandte Seite (26) und eine windabgewandte Seite (28);
mindestens einen Grenzschichtzaun (40) an mindestens einer der windzugewandten Seite und der windabgewandten Seite des Blatts; und
eine Vielzahl von Durchgängen (42), die in dem Zaun geformt sind, wobei jeder der Durchgänge einen Einlass (44) an einem Nabenende des Zauns und einen Auslass (46) an einem Spitzenende des Zauns aufweist; **dadurch gekennzeichnet, dass**
jeder Durchgang (42) einen Querschnitt aufweist, der von dem Einlass (44) zu dem Auslass abnimmt, wobei der Auslass (46) ausgerichtet ist, um Luft zu der Blatthinterkante des Blatts hin abzuleiten.

2. Windkraftanlagenblatt nach Anspruch 1, wobei der Grenzschichtzaun (40) als durchgehender Körper (50) geformt ist, und wobei die Durchgängen Düsen (52) sind, die sich durch den Körper erstrecken; oder
wobei der Grenzschichtzaun aus einer Vielzahl von diskreten Lamellen (62, 64, 66, 68, 70, 72) geformt ist, und wobei die Durchgänge zwischen angrenzenden Lamellen geformt sind.

3. Windkraftanlagenblatt nach einem der vorstehenden Ansprüche, wobei der Grenzschichtzaun (40) einen im Allgemeinen dreieckigen transversalen Querschnitt aufweist.

4. Windkraftanlagenblatt nach einem der vorstehenden Ansprüche, wobei der Grenzschichtzaun (40) eine Höhe von etwa einmal zu zweimal der Grenzschichtdicke und eine Breite von etwa der halben bis zu zweimal der Grenzschichtdicke aufweist.

5. Windkraftanlagenblatt nach einem der vorstehenden Ansprüche, wobei der Einlass (44) und der Auslass (46) ein Flächenverhältnis aufweisen, das im Bereich von etwa 2:1 bis etwa 30:1 liegt.

6. Windkraftanlagenblatt nach einem der vorstehenden Ansprüche, wobei der Auslass (46) einen Gierwinkel θ₁ in Bezug auf eine transversale Ausdehnung des Blatts formt, wobei θ₁ im Bereich von etwa 10 Grad bis etwa 60 Grad liegt, und/oder der Auslass einen Blattwinkel θ₂ in Bezug auf eine Längsausdehnung des Blatts formt, wobei θ₂ im Bereich von etwa 5 Grad bis etwa 45 Grad liegt.

7. Windkraftanlagenblatt nach einem der vorstehenden Ansprüche, wobei der Grenzschichtzaun (40) eine aerodynamische Form aufweist.

8. Windkraftanlagenblatt nach einem der vorstehenden Ansprüche, wobei der Grenzschichtzaun (40) eine aerodynamische Form mit einem gewölbten hinteren Ende (90), einem stumpf-konischen hinteren Ende (92) oder einem scharfen hinteren Ende (94) aufweist.

9. Windkraftanlagenblatt nach einem der vorstehenden Ansprüche, wobei der Grenzschichtzaun (40) ein teilweiser Sehnen-Grenzschichtzaun ist, der an der windabgewandten Seite (28) des Blatts gelegen ist; oder
wobei der Grenzschichtzaun ein teilweiser Sehnen-Grenzschichtzaun ist, der an der windzugewandten Seite (26) des Blatts gelegen ist.

10. Windkraftanlagenblatt nach einem der Ansprüche 1 - 8, wobei der Grenzschichtzaun (40) ein Komplettring-Grenzschichtzaun ist, der um eine Gesamtheit des Blatts gelegen ist.

11. Windkraftanlagenblatt nach einem der vorstehenden Ansprüche, wobei der Grenzschichtzaun (40) im Allgemeinen rechtwinklig zu der Blattvorderkante (30) des Blatts ist.

12. Windkraftanlagenblatt nach einem der Ansprüche 1 - 10, wobei der Grenzschichtzaun (40) von dem Spitzenende des Blatts aus betrachtet im Allgemeinen konvex geformt ist
oder wobei der Grenzschichtzaun von dem Spitzenende des Blatts aus betrachtet im Allgemeinen konkav geformt ist.

13. Windkraftanlagenblatt nach einem der vorstehenden Ansprüche, wobei das Windkraftanlagenblatt eine Vielzahl von Grenzschichtzäune (40) an mindestens einer der windzugewandten Seite (26) und der windabgewandten Seite (28) des Blatts einschließt.

14. Windkraftanlagenblatt nach Anspruch 13, wobei ein Grenzschichtzaun (40) eine Höhe, Breite, Länge und/oder Position in Schwenkrichtung auf dem Blatt aufweist, die unterschiedlich ist als eine entsprechende Höhe, Breite, Länge und/oder Position in Schwenkrichtung eines anderen Grenzschichtzaun.

15. Windkraftanlage (10), umfassend:
einen Turm (12);
eine Gondel (14), die auf dem Turm montiert ist;
eine Nabe (20), die an der Gondel montiert ist; und
eine Vielzahl von Blättern (22) nach einem der Ansprüche 1 - 14, die an der Nabe montiert sind.

## Revendications

1. Pale d'éolienne (22), comprenant :
une extrémité de moyeu (34), un bout de pale (36), un bord d'attaque (30), un bord de fuite (32), un intrados (26), et un extrados (28) ;
au moins une barrière de couche limite (40) sur au moins l'un parmi ledit intrados et ledit extrados de ladite pale ; et
une pluralité de passages (42) formés dans ladite barrière, chaque dit passage comportant une entrée (44) sur un côté d'extrémité de moyeu de ladite barrière et une sortie (46) sur un côté de bout de pale de ladite barrière ; **caractérisée en ce que**
chaque passage (42) présente une coupe qui diminue depuis ladite entrée (44) jusqu'à ladite sortie, chaque dite sortie (46) étant orientée pour décharger de l'air vers ledit bord de fuite de ladite pale.

2. Pale d'éolienne selon la revendication 1, dans laquelle ladite barrière de couche limite (40) est formée en tant qu'un corps continu (50), et dans laquelle lesdits passages sont des buses (52) s'étendant à travers ledit corps ; ou
dans laquelle ladite barrière de couche limite est formée d'une pluralité d'ailettes discrètes (62, 64, 66, 68, 70, 72) et dans laquelle lesdits passages sont formés entre des ailettes adjacentes parmi lesdites ailettes.

3. Pale d'éolienne selon l'une quelconque des revendications précédentes, dans laquelle ladite barrière de couche limite (40) présente une coupe transversale généralement triangulaire.

4. Pale d'éolienne selon l'une quelconque des revendications précédentes, dans laquelle ladite barrière de couche limite (40) présente une hauteur d'environ une à deux fois l'épaisseur de couche limite et une largeur d'environ la moitié à deux fois l'épaisseur de couche limite.

5. Pale d'éolienne selon l'une quelconque des revendications précédentes, dans laquelle ladite entrée (44) et ladite sortie (46) présentent un rapport de surface dans une plage d'environ 2:1 à environ 30:1.

6. Pale d'éolienne selon l'une quelconque des revendications précédentes, dans laquelle ladite sortie (46) forme un angle de lacet θ₁ par rapport à une étendue transversale de ladite pale où θ₁ est dans une plage d'environ 10 degrés à environ 60 degrés, et/ou ladite sortie forme un angle de calage θ₂ par rapport à une étendue longitudinale de ladite pale où θ₂ est dans une plage d'environ 5 degrés à environ 45 degrés.

7. Pale d'éolienne selon l'une quelconque des revendications précédentes, dans laquelle ladite barrière de couche limite (40) présente une forme de profil aérodynamique.

8. Pale d'éolienne selon l'une quelconque des revendications précédentes, dans laquelle ladite barrière de couche limite (40) présente une forme de profil aérodynamique avec une extrémité arrière cambrée (90), une extrémité arrière en forme de rétreint émoussée (92), ou une extrémité arrière tranchante (94).

9. Pale d'éolienne selon l'une quelconque des revendications précédentes, dans laquelle ladite barrière de couche limite (40) est une barrière de couche limite de corde partielle située sur ledit extrados (28) de ladite pale ; ou
dans laquelle ladite barrière de couche limite est une barrière de couche limite de corde partielle située sur ledit intrados (26) de ladite pale.

10. Pale d'éolienne selon l'une quelconque des revendications 1-8, dans laquelle ladite barrière de couche limite (40) est une barrière de couche limite d'anneau complet située autour d'une intégralité de ladite pale.

11. Pale d'éolienne selon l'une quelconque des revendications précédentes, dans laquelle ladite barrière de couche limite (40) est généralement perpendiculaire audit bord d'attaque (30) de ladite pale.

12. Pale d'éolienne selon l'une quelconque des revendications 1-10, dans laquelle ladite barrière de couche limite (40) est de forme généralement convexe en vue depuis ledit bout de pale de ladite pale
ou dans laquelle ladite barrière de couche limite est de forme généralement concave en vue depuis ledit bout de pale de ladite pale.

13. Pale d'éolienne selon l'une quelconque des revendications précédentes, dans laquelle ladite pale d'éolienne inclut une pluralité de barrières de couche limite (40) sur au moins l'un parmi ledit intrados (26) et ledit extrados (28) de ladite pale.

14. Pale d'éolienne selon la revendication 13, dans laquelle une barrière de couche limite (40) présente une hauteur, une largeur, une longueur et/ou une position dans le sens de la corde sur la pale différentes d'une hauteur, d'une largeur, d'une longueur et/ou d'une position dans le sens de la corde correspondantes d'une autre barrière de couche limite.

15. Éolienne (10), comprenant :
une tour (12) ;
une nacelle (14) montée sur ladite tour ;
un moyeu (20) monté sur ladite nacelle ; et
une pluralité de pales (22) selon l'une quelconque des revendications 1-14 montées sur ledit moyeu.
